# EUROPEAN PATENT APPLICATION

(11) **EP 4 625 627 A1**
(43) Date of publication of application: **01.10.2025**
(21) Application number: 25164625.3
(22) Date of filing: 19.03.2025
(51) Int. Cl.: H01M 50/105, H01M 50/516, H01M 50/54

(54) **ELECTROCHEMICAL APPARATUS, ELECTRIC DEVICE, AND METHOD FOR MANUFACTURING SUCH ELECTROCHEMICAL APPARATUS**

(30) Priority: 27.03.2024 CN 202410362708
(71) Applicant: Ningde Amperex Technology Ltd., Ningde City, Fujian Province 352100 (CN)
(72) Inventor: LV, Feifei, Ningde City, Fujian Province 352100 (CN); WU, Hua, Ningde City, Fujian Province 352100 (CN)
(74) Representative: Icosa

(57) **Abstract**

An electrochemical apparatus includes a soft package film, an electrode assembly (2), a first tab (3), and a first protective member (4). The electrode assembly (2) is accommodated within the soft package film, and the electrode assembly (2) includes an electrode body (21) and a plurality of first extension portions (22). One end of each of the plurality of first extension portions (22) is connected to the electrode body (21), the plurality of first extension portions (22) are sequentially stacked along a first direction, the other ends of the plurality of first extension portions (22) are stacked on the first protective member (4), and the other ends of the plurality of first extension portions (22) and the first protective member (4) are welded to form a first adapting portion. One end of the first tab (3) is welded to the first adapting portion, and another end of the first tab (3) extends out of the soft package film.

## Description

### TECHNICAL FIELD

Some embodiments of this application relate to the technical field of electrochemical apparatuses, and in particular, to an electrochemical apparatus, an electric device, and a method for manufacturing such electrochemical apparatus

### BACKGROUND

Electrochemical apparatuses are widely used in consumer products. With the continuous development of the consumer products, increasing requirements are imposed on electrochemical apparatuses involved in the consumer products. For example, the electrochemical apparatuses involved in the consumer products are required to have thin thickness and high energy density. Therefore, ultra-thin electrochemical apparatuses, such as ultra-thin batteries, have become the optimal choice.

An ultra-thin electrochemical apparatus typically includes a housing, an electrode assembly, and a tab assembly, where the electrode assembly is located inside the housing, one portion of the tab assembly is led into the housing to be connected to the electrode assembly, and another portion of the tab assembly is led out of the housing. During a manufacturing process of the ultra-thin electrochemical apparatus, the tab assembly is formed by welding several tab layers. However, during the welding process, the tab layers of the tab assembly coming into contact with a welding base are prone to damage, resulting in a small peeling force of the tab layers of the tab assembly coming into contact with the welding base after welding, and causing the tab layers to be prone to detachment. Thus, this reduces the stability of the tab assembly, resulting in a high probability of phenomena such as burrs, abnormal protrusions, or cycling performance degradation during a later process of assembling the tab assembly into the ultra-thin electrochemical apparatus, thereby leading to the safety problem of the ultra-thin electrochemical apparatus.

### SUMMARY

The main technical problem to be solved by some embodiments of this application is to provide an electrochemical apparatus, an electric device, and a method for manufacturing such electrochemical apparatus, which can lower the probability of detachment of a tab layer of a tab assembly coming into contact with a welding base.

To solve the foregoing technical problem, one technical solution adopted in some embodiments of this application is as follows: An electrochemical apparatus includes a soft package film, an electrode assembly, a first tab, and a first protective member, where the electrode assembly is accommodated within the soft package film, and the electrode assembly includes an electrode body and a plurality of first extension portions. One end of each of the plurality of first extension portions is connected to the electrode body, the plurality of first extension portions are sequentially stacked along a first direction, the other ends of the plurality of first extension portions are stacked on the first protective member, and the other ends of the plurality of first extension portions and the first protective member are welded to form a first adapting portion. One end of the first tab is welded to the first adapting portion, and another end of the first tab extends out of the soft package film. The first direction is a thickness direction of the electrode assembly.

In some embodiments, a plurality of weld marks are formed on a surface of one end of the first tab facing away from the first extension portion, the plurality of weld marks are arranged along a second direction, and the second direction is perpendicular to the first direction.

In some embodiments, the first protective member is formed by bending at least one of the plurality of first extension portions.

In some embodiments, the first protective member is formed by bending one first extension portion closest to the first protective member along the first direction; and/or the first protective member is formed by bending one first extension portion closest to the first protective member and one first extension portion next closest to the first protective member together along the first direction.

In some embodiments, the first protective member includes at least one spacer, and the other ends of the plurality of first extension portions and the at least one spacer are welded to form the first adapting portion.

In some embodiments, in the first direction, a thickness D1 of the first protective member satisfies: 6 um≤D≤10 um; and/or in a third direction, a width of the first protective member is less than or equal to a width of the first extension portion, and the third direction is perpendicular to the first direction.

In some embodiments, the electrochemical apparatus further includes a second tab and a second protective member. The electrode assembly further includes a plurality of second extension portions, where one end of each of the plurality of second extension portions is connected to the electrode body, the other ends of the plurality of second extension portions are sequentially stacked along the first direction, the other ends of the plurality of second extension portions are further stacked on the second protective member along the first direction, and the other ends of the plurality of second extension portions and the second protective member are welded to form a second adapting portion. One end of the second tab is welded to the second adapting portion, and another end of the second tab extends out of the soft package film. The first tab and the second tab have opposite polarities.

In some embodiments, the second protective member is formed by bending one second extension portion closest to the second protective member along the first direction; and/or the second protective member is formed by bending one second extension portion closest to the second protective member and one second extension portion next closest to the second protective member together along the first direction.

In some embodiments, the second protective member includes at least one spacer, and the other ends of the plurality of second extension portions and the at least one spacer are welded to form the second adapting portion.

To solve the foregoing technical problem, another technical solution adopted in some embodiments of this application is to provide an electric device including the foregoing electrochemical apparatus.

To solve the foregoing technical problem, another technical solution adopted in some embodiments of this application is to provide a method for manufacturing an electrochemical apparatus. The method includes: providing an electrode assembly, where the electrode assembly includes an electrode body and a plurality of first extension portions, and one end of each of the plurality of first extension portions is connected to the electrode body; sequentially stacking the other ends of the plurality of first extension portions along a first direction; providing a first protective member, and stacking the other ends of the plurality of first extension portions on the first protective member; welding the other ends of the plurality of first extension portions to the first protective member on sides of the plurality of first extension portions away from the first protective member, so as to fix the other ends of the plurality of first extension portions and the first protective member together to form a first adapting portion; providing a first tab and welding one end of the first tab to the first adapting portion; providing a soft package film, where the soft package film includes a first package film and a second package film; and placing the electrode assembly between the first package film and the second package film, and sealing edges of the first package film and second package film, where another end of the first tab extends out of the soft package film.

In some embodiments, the step of providing a first protective member further includes: bending at least one of the plurality of first extension portions to form the first protective member.

In some embodiments, the step of providing a first protective member further includes: providing at least one spacer, and pre-welding the at least one spacer to the other ends of the plurality of first extension portions to form the first protective member.

In some embodiments, before the step of welding the other ends of the plurality of first extension portions to the first protective member on sides of the plurality of first extension portions away from the first protective member, the method further includes: cutting portions of the plurality of first extension portions extending beyond the first protective member along a fourth direction, where the fourth direction is perpendicular to the first direction, and the fourth direction is a direction from one end of the first extension portion to another end of the first extension portion.

The beneficial effects of some embodiments of this application are as follows: Different from the situation of the prior art, some embodiments of this application provide an electrochemical apparatus including a soft package film, an electrode assembly, a first tab, and a first protective member, where the electrode assembly is accommodated within the soft package film, and the electrode assembly includes an electrode body and a plurality of first extension portions. One end of each of the plurality of first extension portions is connected to the electrode body, and the other ends of the plurality of first extension portions are sequentially stacked along a first direction. The first direction is a direction perpendicular to the top and bottom of the electrode body. The other ends of the plurality of first extension portions are further stacked on the first protective member along the first direction, and the other ends of the plurality of first extension portions and the first protective member are welded to form a first adapting portion. One end of the first tab is welded to the first adapting portion, and another end of the first tab extends out of the soft package film. With the first protective member provided, the first protective member can come into contact with a welding base during the process of welding the plurality of first extension portions and the process of welding the first tab, which reduces the damage degree of the first extension portion close to the welding base and lowers the probability of detachment of the first extension portion close to the welding base. Thus, during a later process of assembling the electrochemical apparatus, the probability of phenomena such as burrs, abnormal protrusions, or cycling performance degradation is lowered, thereby enhancing the safety of the electrochemical apparatus.

### BRIEF DESCRIPTION OF DRAWINGS

To describe the technical solutions in specific embodiments of this application or in the prior art more clearly, the following briefly describes the accompanying drawings required for describing the specific embodiments or the prior art. In all the accompanying drawings, similar elements or portions are generally marked by similar reference signs. In the accompanying drawings, the elements or portions are not necessarily drawn to the actual scale.
FIG. 1 is a schematic diagram of an overall structure of an electrochemical apparatus according to an embodiment of this application;
FIG. 2 is a schematic diagram of a welding state of an electrochemical apparatus according to an embodiment of this application;
FIG. 3 shows overall steps of a method for manufacturing an electrochemical apparatus according to an embodiment of this application;
FIG. 4 shows specific steps of step S01 of a method for manufacturing an electrochemical apparatus according to an embodiment of this application;
FIG. 5 shows a specific step of step S03 of a method for manufacturing an electrochemical apparatus according to an embodiment of this application;
FIG. 6 shows another specific step of step S03 of a method for manufacturing an electrochemical apparatus according to an embodiment of this application; and
FIG. 7 shows specific steps of step S05 of a method for manufacturing an electrochemical apparatus according to an embodiment of this application.

Reference signs are described as follows:
2. electrode assembly; 21. electrode body; 211. single-sided cathode plate; 212. double-sided cathode plate; 213. double-sided anode plate; 214. separator; 22. first extension portion; 3. first tab; 4. first protective member; 5. welding head; and 6. welding base.

### DETAILED DESCRIPTION OF EMBODIMENTS

For ease of understanding of this application, the following describes this application in more detail with reference to the accompanying drawings and specific embodiments. It should be noted that when an element is referred to as being "fixed to" another element, the element may be directly fixed to the another element, or there may be one or more elements therebetween. When an element is referred to as being "connected to" another element, the element may be directly connected to the another element, or there may be one or more elements therebetween. The orientations or positional relationships indicated by the terms "upper", "lower", "inside", "outside", "perpendicular", "horizontal", and the like used herein are based on the orientations or positional relationships shown in the accompanying drawings. These terms are merely for ease and brevity of description of this application rather than indicating or implying that the apparatuses or elements mentioned must have specific orientations or must be constructed or manipulated according to specific orientations, and therefore shall not be construed as any limitations on this application. In addition, the terms "first", "second", and the like are merely intended for a purpose of description and shall not be understood as an indication or implication of relative importance. Parallel or perpendicular in this application is not absolutely parallel or absolutely perpendicular in the strict sense. Within a tolerance range, 90°±5° should be regarded as perpendicular, and 180°±5° should be regarded as parallel.

Unless otherwise defined, all technical and scientific terms used in this specification shall have the same meanings as those commonly understood by persons skilled in the art to which this application pertains. The terms used in this specification are merely for the purpose of describing specific embodiments and are not intended to limit this application. The term "and/or" used in this specification includes any and all combinations of one or more related listed items.

In addition, the technical features involved in different embodiments of this application described below can be combined with each other as long as they do not conflict with each other.

An electrochemical apparatus typically includes a soft package film, an electrode assembly, and a tab assembly, where the electrode assembly is located inside a housing, one portion of the tab assembly is led into the housing to connect to the electrode assembly, and another portion of the tab assembly is led out of the housing. The tab assembly typically adopts a direct welding method using a single row of welding teeth arranged along a straight line, that is, several layers of tabs are stacked and welded between a welding head and a welding base arranged perpendicular to a stacking direction to form the tab assembly. However, during the welding process, the tab layers of the tab assembly coming into contact with the welding base are prone to damage, resulting in a small peeling force of the tab layers of the tab assembly coming into contact with the welding base after welding, and causing the tab layers of the tab assembly coming into contact with the welding base to be prone to detachment. Thus, this leads to a high probability of phenomena such as burrs, abnormal protrusions, or cycling performance degradation during a later process of assembling the electrochemical apparatus, thereby reducing the safety of the electrochemical apparatus.

An embodiment of this application provides an electrochemical apparatus including a soft package film, an electrode assembly 2, and a plurality of first extension portions 22, a first tab 3, and a first protective member 4 that are stacked, welded, and formed, where the plurality of first extension portions 22, the first tab 3, and the first protective member 4 are equivalent to a tab assembly connected to the electrode assembly 2. During the process of welding and forming the plurality of first extension portions 22, the first tab 3, and the first protective member 4, the first protective member 4 is configured to come into contact with a welding base 6. Therefore, after welding and forming, the damage degree of the first extension portion 22 close to the welding base 6 can be reduced, which lowers the probability of detachment of the first extension portion 22 close to the welding base 6. Thus, during a later process of assembling the electrochemical apparatus, the probability of phenomena such as burrs, abnormal protrusions, or cycling performance degradation is lowered, thereby enhancing the safety of the electrochemical apparatus.

The following describes the solution of this application by using some embodiments.

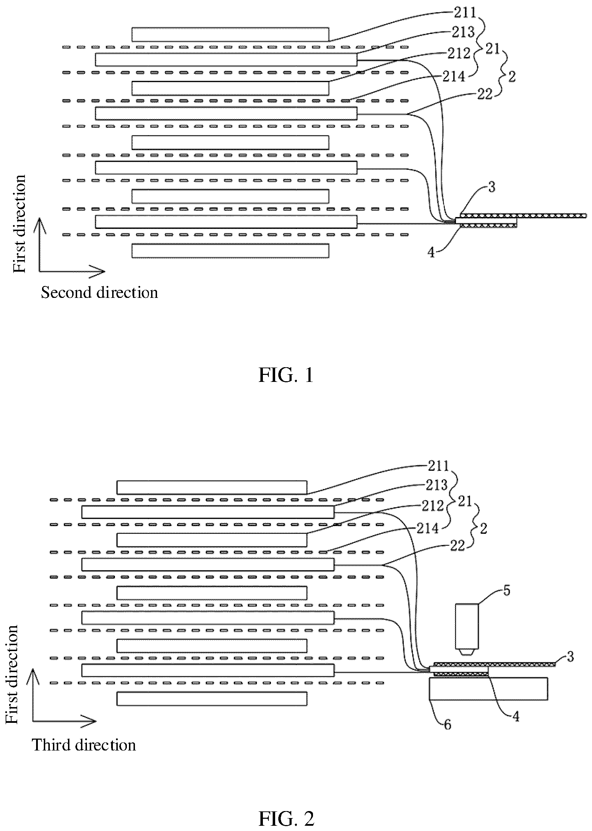

Referring to FIG. 1, an embodiment of this application provides an electrochemical apparatus including a soft package film, an electrode assembly 2, a first tab 3, and a first protective member 4. The electrode assembly 2 is accommodated within the soft package film. The electrode assembly 2 includes an electrode body 21 and a plurality of first extension portions 22. One end of each of the plurality of first extension portions 22 is connected to the electrode body 21, the plurality of first extension portions 22 are sequentially stacked along a first direction, and the first direction is a thickness direction of the electrode assembly 2. It should be understood that the plurality of first extension portions 22 are stacked along the thickness direction of the electrode assembly 2. This does not mean in the strict sense that a line connecting connection points of endpoints is parallel to the thickness direction of the electrode assembly 2, but means that there should be an allowable deviation within a tolerance range. The other ends of the plurality of first extension portions 22 are stacked on the first protective member 4, and the other ends of the plurality of first extension portions 22 and the first protective member 4 are welded to form a first adapting portion. One end of the first tab 3 is welded to the first adapting portion, and another end of the first tab 3 extends out of the soft package film.

For the foregoing electrochemical apparatus, referring to FIG. 1, the soft package film is formed by sealing edges of the first package film and second package film sequentially stacked along the first direction, and the first package film and the second package film jointly enclose an accommodation space. The electrode assembly 2 includes two layers of single-sided cathode plates, a plurality of layers of double-sided cathode plates 212, a plurality of layers of double-sided anode plates 213, and a plurality of layers of separators 214. Along the first direction, the two layers of single-sided cathode plates are arranged at the top and the bottom, the plurality of layers of double-sided cathode plates 212 and the plurality of layers of double-sided anode plates 213 are alternately stacked at a middle position, and a layer of separator 214 is arranged between each of two adjacent cathode plates and one anode plate. Along the first direction, ends of the plurality of first extension portions 22 are spaced apart, one end of one first extension portion 22 is connected to a layer of anode plate or a layer of cathode plate, and the other ends of the plurality of first extension portions 22 are stacked and attached to each other. In addition, along the first direction, the first protective member 4 is stacked and attached to the bottoms of the plurality of first extension portions 22, and the first tab 3 is stacked and attached to the tops of the plurality of first extension portions 22. During a welding process, a welding head 5 abuts against the top of the first tab 3, and a welding base 6 abuts against the bottom of the first protective member 4, so that the first tab 3, the plurality of first extension portions 22, and the first protective member 4 are welded and fixed along the first direction. It should be noted that the first tab 3, the plurality of first extension portions 22, and the first protective member 4 welded and formed are equivalent to a tab assembly configured to be connected to the electrode assembly 2, where a portion of the tab assembly extending into the soft package film is equivalent to one end of the first tab 3, the plurality of first extension portions 22, and the first protective member 4; and a portion of the tab assembly extending out of the soft package film is equivalent to another end of the first tab 3.

Further, for the foregoing first tab 3, in order to improve the utilization of a head space of a cell, in some embodiments, the first tab 3 adopts a welding method using a single row of welding teeth arranged along a same straight line, that is, during the welding process of the first tab 3, a welding head for welding has a plurality of welding teeth arranged along a same straight line. After the welding of the first tab 3 is completed, a plurality of weld marks are formed on a surface of one end of the first tab 3 facing away from the first extension portions 22, the plurality of weld marks are arranged along a second direction, the second direction is a width direction of the first adapting portion, and the second direction is perpendicular to the first direction, that is, the plurality of weld marks are arranged along a same straight line. As compared with a welding method using two or more rows of welding teeth, the size of the weld marks is reduced. It should be understood that the arrangement along the same straight line does not refer to an arrangement along the same straight line in the strict sense, but refers to that there should be an allowable deviation within a tolerance range.

Compared with a welding method using double rows of welding teeth or a welding method using multiple rows of welding teeth, the welding method using a single row of welding teeth can reduce the head space of the cell, but there is a problem that an outermost first extension portion 22 is prone to detachment. In this application, with the first protective member 4 provided, the reliability of the outermost first extension portion 22 can be ensured when the welding method using the single row of welding teeth.

Further, for the foregoing first protective member 4, in some embodiments, the first protective member 4 is formed by bending at least one of the plurality of first extension portions 22. In some examples, along the first direction, the first protective member 4 is formed by bending one first extension portion 22 closest to the first protective member 4, or the first protective member 4 is formed by bending one first extension portion 22 closest to the first protective member 4 and one first extension portion 22 next closest to the first protective member 4 together.

Further, for the foregoing first protective member 4, in some other embodiments, the first protective member 4 includes at least one spacer, that is, the first protective member 4 is formed by at least one independent spacer, and the other ends of the plurality of first extension portions 22 and the at least one spacer are welded to form the first adapting portion.

Further, for the foregoing first protective member 4, in some embodiments, regardless of whether the first protective member 4 is formed by bending the first extension portion 22 or by stacking and welding the independent spacers, referring to FIG. 1, in the first direction, a thickness D of the first protective member 4 satisfies: 6 um≤D≤10 um. Limiting the size of the thickness can allow the first protective member 4 to have a sufficient thickness to resist the loss generated during the welding process, reducing the damage degree of the first extension portion 22 close to the first protective member 4, and increasing the peeling force of the first extension portion 22 close to the first protective member 4, thereby lowering the probability of detachment of the first extension portion 22 close to the first protective member 4. In some examples, D may be 6 um, 8 um, or 10 um.

Further, for the foregoing first protective member 4, in some embodiments, regardless of whether the first protective member 4 is formed by bending the first extension portion 22 or by stacking and welding the independent spacers, referring to FIG. 1, in a third direction, a width of the first protective member 4 is less than or equal to a width of the first extension portion 22, the third direction is perpendicular to the first direction, and the third direction is a direction from one end of the first extension portion 22 to another end of the first extension portion 22. To increase a contact area between connection portions of the formed first protective member 4 and the first extension portion 22, the connection strength after welding is enhanced, and the probability of detachment of the first protective member 4 and the first extension portion 22 during use is lowered, thereby maintaining the safety of the electrochemical apparatus. In the third direction, the width of the first protective member 4 is preferably equal to the width of the first extension portion 22.

When the first protective member 4 is formed by bending the first extension portion 22, to enable the width of the formed first protective member 4 to be approximately equal to the width of the first extension portion 22, a width of a bent portion and a width of an unbent portion of the bent first extension portion 22 needs to be approximately equal to each other. In some examples, along the third direction, the bent first extension portion 22 is bent at its middle position to form the first protective member 4. Moreover, with consideration that a length of the unbent first extension portion 22 in the third direction is greater than a length of the formed first protective member 4 in the third direction, the plurality of unbent first extension portions 22 are each further provided with a cutting region. Through cutting, the width of the formed first protective member 4 is equal to the width of the unbent first extension portion 22. In the third direction, a length of the cutting region is equal to the length of the unbent first extension portion 22 minus the length of the first protective member 4.

When the first protective member 4 is formed by stacking and welding independent spacers, to enable the width of the formed first protective member 4 to be approximately equal to the width of the first extension portion 22, a length of the spacer is preferably approximately equal to the width of the first extension portion 22.

Further, since the electrode assembly 2 of the electrochemical apparatus includes a positive electrode plate (anode plate) and a negative electrode plate (cathode plate), the electrochemical apparatus further includes a second tab (not shown in the figure) and a second protective member (not shown in the figure). The electrode assembly 2 further includes a plurality of second extension portions (not shown in the figure), where one end of each of the plurality of second extension portions is connected to the electrode body 21, the other ends of the plurality of second extension portions are sequentially stacked along the first direction, the other ends of the plurality of second extension portions are further stacked on the second protective member along the first direction, and the other ends of the plurality of second extension portions and the second protective member are welded to form a second adapting portion. One end of the second tab is welded to the second adapting portion, and another end of the second tab extends out of the soft package film. The first tab 3 and the second tab have opposite polarities. In some examples, ends of the plurality of first extension portions 22 are connected to a plurality of layers of anode plates of the electrochemical apparatus, and the other ends of the plurality of first extension portions 22 are connected to the first tab 3. Ends of the plurality of second extension portions are connected to a plurality of layers of cathode plates of the electrochemical apparatus, and the other ends of the plurality of second extension portions are connected to the second tab.

Further, for the foregoing second protective member, in some embodiments, the second protective member is formed by bending one second extension portion closest to the second protective member along the first direction; and/or the second protective member is formed by bending one second extension portion closest to the second protective member and one second extension portion next closest to the second protective member together along the first direction.

Further, for the foregoing second protective member, in some embodiments, the second protective member includes at least one spacer, that is, the second protective member is formed by stacking and welding at least one independent spacer, and the other ends of the plurality of second extension portions and the at least one spacer are welded to the second adapting portion.

An embodiment of this application further provides an electric device including the foregoing electrochemical apparatus. For the specific structure and function of the foregoing electrochemical apparatus, refer to the foregoing embodiments. Details are not described herein again.

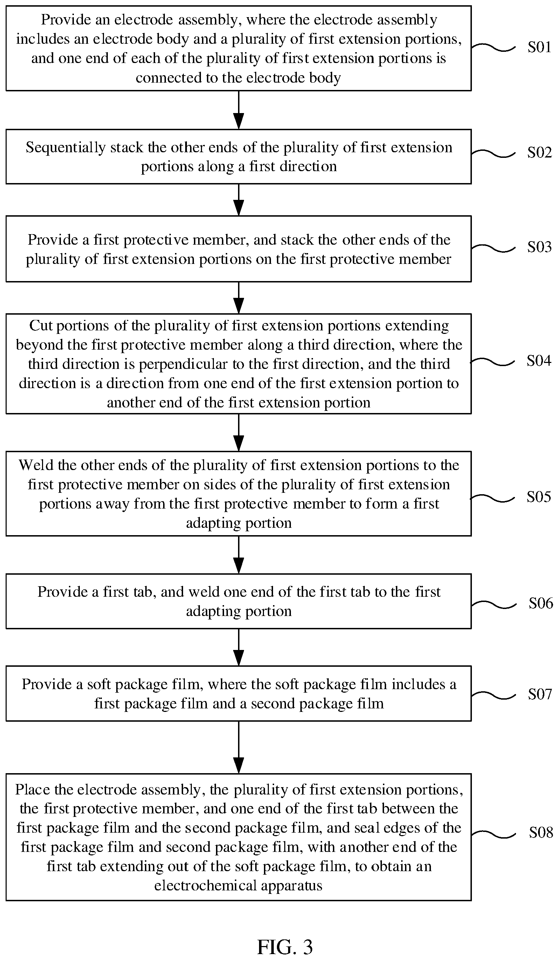

An embodiment of this application further provides a method for manufacturing an electrochemical apparatus. The method is used for manufacturing the electrochemical apparatus in the foregoing embodiments. Referring to FIG. 2 and FIG. 3, in some embodiments, the method includes the following steps.

Step S01: Provide an electrode assembly 2, where the electrode assembly 2 includes an electrode body 21 and a plurality of first extension portions 22, and one end of each of the plurality of first extension portions 22 is connected to the electrode body 21.

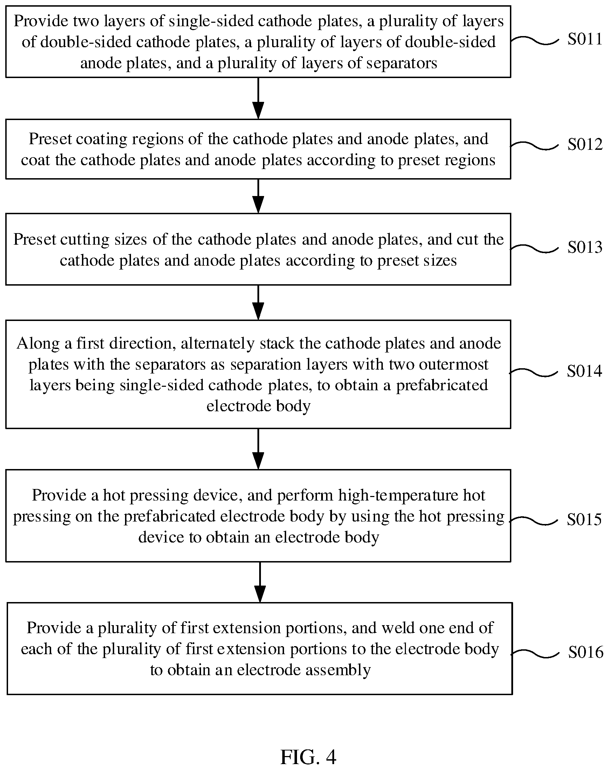

In some embodiments, referring to FIG. 4, the step of providing an electrode assembly 2 further includes the following steps.

Step S011: Provide two layers of single-sided cathode plates, a plurality of layers of double-sided cathode plates 212, a plurality of layers of double-sided anode plates 213, and a plurality of layers of separators 214.

Step S012: Preset coating regions of the cathode plates and anode plates, and coat the cathode plates and anode plates according to preset regions.

Step S013: Preset cutting sizes of the cathode plates and anode plates, and cut the cathode plates and anode plates according to preset sizes.

Step S014: Along a first direction, alternately stack the cathode plates and anode plates with the separators 214 as separation layers, with two outermost layers being single-sided cathode plates, to obtain a prefabricated electrode body 21.

During the process of alternately stacking the cathode plates and anode plates with the separators 214 as the separation layers, along a fourth direction, the misalignment of the cathode plates and anode plates is controlled within ±0.15 mm, the fourth direction is perpendicular to the first direction, and the fourth direction is a direction from one side to another side of the cathode plate or anode plate.

Step S015: Provide a hot pressing device, and perform high-temperature hot pressing on the prefabricated electrode body 21 by using the hot pressing device to obtain the electrode body 21.

Step S016: Provide a plurality of first extension portions 22, and weld one end of each of the plurality of first extension portions 22 to the electrode body 21 to obtain the electrode assembly 2.

Step S02: Sequentially stack the other ends of the plurality of first extension portions 22 along the first direction.

Step S03: Provide a first protective member 4, and stack the other ends of the plurality of first extension portions 22 on the first protective member 4.

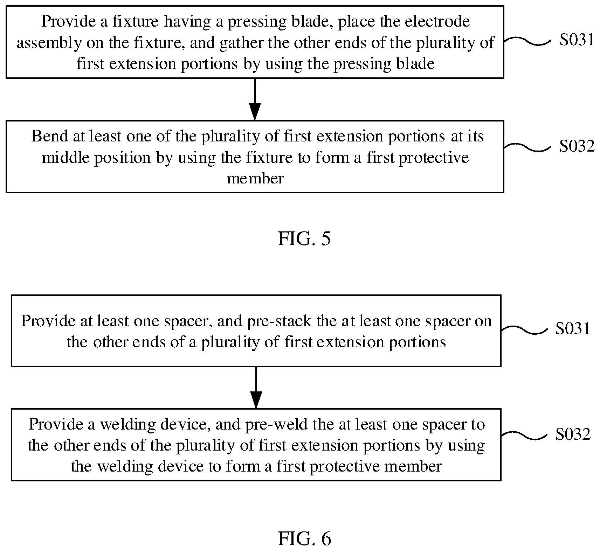

In some embodiments, referring to FIG. 5, the step of providing a first protective member 4 further includes the following steps.

Step S031: Provide a fixture having a pressing blade, place the electrode assembly 2 on the fixture, and gather the other ends of the plurality of first extension portions 22 by using the pressing blade.

Step S032: Bend at least one of the plurality of first extension portions 22 at its middle position by using the fixture to form the first protective member 4.

In addition, in some other embodiments, referring to FIG. 6, the step of providing the first protective member 4 further includes the following steps.

Step S031: Provide at least one spacer, and pre-stack the at least one spacer on the other ends of the plurality of first extension portions 22.

Step S032: Provide a welding device, and pre-weld the at least one spacer to the other ends of the plurality of first extension portions 22 by using the welding device to form the first protective member 4.

Step S04: Cut portions of the plurality of first extension portions 22 extending beyond the first protective member 4 along a third direction, where the third direction is perpendicular to the first direction, and the third direction is a direction from one end of the first extension portion 22 to another end of the first extension portion 22.

Step S05: Weld the other ends of the plurality of first extension portions 22 to the first protective member 4 on sides of the plurality of first extension portions 22 away from the first protective member 4, so as to fix the other ends of the plurality of first extension portions 22 and the first protective member 4 together to form a first adapting portion.

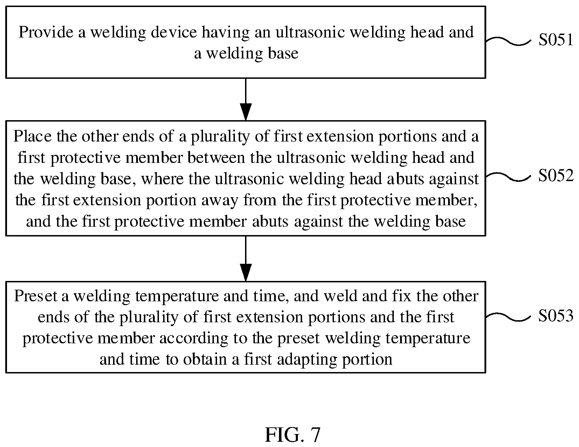

In some embodiments, referring to FIG. 7, the step of welding the other ends of the plurality of first extension portions 22 to the first protective member 4 on sides of the plurality of first extension portions 22 away from the first protective member 4 further includes the following steps.

Step S051: Provide a welding device having an ultrasonic welding head 5 and a welding base 6.

Step S052: Place the other ends of the plurality of first extension portions 22 and the first protective member 4 between the ultrasonic welding head 5 and the welding base 6, where the ultrasonic welding head 5 abuts against the first extension portion 22 away from the first protective member 4, and the first protective member 4 abuts against the welding base 6.

Step S053: Preset a welding temperature and time, and weld and fix together the other ends of the plurality of first extension portions 22 and the first protective member 4 according to the preset welding temperature and time to obtain a first adapting portion.

Step S06: Provide a first tab 3, and weld one end of the first tab 3 to the first adapting portion.

Step S07: Provide a soft package film, where the soft package film includes a first package film and a second package film.

Step S08: Place the electrode assembly 2, the plurality of first extension portions 22, the first protective member 4, and one end of the first tab 3 between the first package film and the second package film, and seal edges of the first package film and second package film, with another end of the first tab 3 extending out of the soft package film, to obtain an electrochemical apparatus.

To facilitate the understanding of readers on the concept of some embodiments of this application, a vertical tension meter is used to test the peeling force of the first extension portion 22 close to the first protective member 4 in the electrochemical apparatus, and the experimental data obtained are described below.

| | Comparative example 1 | Example 1 | Example 2 | Comparative example 2 |
|---|---|---|---|---|
| Thickness of first protective member (um) | 0 | 6 | 10 | 18 |
| Peeling force of first extension portion (N) | 0.8 | 2.6 | 3.6 | 5.0 |

According to the foregoing experimental data, it can be seen that as compared with the case without the first protective member 4, the peeling force of the first extension portion 22 increases after the first protective member 4 is provided. Moreover, as the thickness of the first protective member 4 increases, the peeling force of the first extension portion 22 increases. Therefore, with the first protective member 4 provided, the first protective member 4 can come into contact with the welding base 6 during the process of welding the plurality of first extension portions 22 and the process of welding the first tab 3, which reduces the damage degree of the first extension portion 22 close to the welding base 6 and lowers the probability of detachment of the first extension portion 22 close to the welding base 6. In addition, according to the foregoing experimental data, the peeling force of the first extension portion 22 increases as the thickness of the first protective member 4 increases, for example, the peeling force of the first protective member 4 having a thickness of 18 um is greater than that of the first protective member 4 having a thickness of 10 um; however, when the thickness of the first protective member 4 is excessively large, many disadvantages are easily caused. The disadvantages are as follows: first, when the thickness of the first protective member 4 is excessively large, the heat dissipation capability of the first extension portion 22 is easily reduced, causing overheating of the first extension portion 22 and affecting the performance of an energy storage device; second, when the thickness of the first protective member 4 is excessively large, the difficulty of manufacturing the first protective member 4 easily increases, for example, the difficulties of processes such as positioning, bending, cutting, and welding all increase; and third, when the thickness of the first protective member 4 is excessively large, the manufacturing cost of the first protective member 4 easily increases. In conclusion, to increase the peeling force of the first extension portion 22 so as to lower the probability of detachment of the first extension portion 22, and to avoid the disadvantages caused by the excessively large thickness of the first protective member 4, in some embodiments of this application, the thickness of the first protective member 4 is specifically set to be greater than or equal to 6 um and less than or equal to 10 um.

The electrochemical apparatus in some embodiments of this application includes the soft package film, the electrode assembly 2, the first tab 3, and the first protective member 4. The electrode assembly 2 is accommodated within the soft package film. The electrode assembly 2 includes the electrode body 21 and the plurality of first extension portions 22. One end of each of the plurality of first extension portions 22 is connected to the electrode body 21, the other ends of the plurality of first extension portions 22 are sequentially stacked along the first direction, and the first direction is a direction perpendicular to the top and bottom of the electrode body 21. The other ends of the plurality of first extension portions 22 are stacked on the first protective member 4 along the first direction, and the other ends of the plurality of first extension portions 22 and the first protective member 4 are welded to form the first adapting portion. One end of the first tab 3 is welded to the first adapting portion, and another end of the first tab 3 extends out of the soft package film. With first protective member 4 provided, the first protective member 4 can come into contact with the welding base 6 during the process of welding the plurality of first extension portions 22 and the process of welding the first tab 3, which reduces the damage degree of the first extension portion 22 close to the welding base 6 and lowers the probability of detachment of the first extension portion 22 close to the welding base 6. Thus, during a later process of assembling the electrochemical apparatus, the probability of phenomena such as burrs, abnormal protrusions, or cycling performance degradation is lowered, thereby enhancing the safety of the electrochemical apparatus.

The foregoing descriptions are merely some embodiments of this application and are not intended to limit the scope of this application. Equivalent structure or equivalent process transformations made using the content of this specification and accompanying drawings of this application, or directly or indirectly applied in other related technical fields should all fall within the protection scope of this application.

## Claims

1. An electrochemical apparatus, comprising a soft package film, an electrode assembly (2), a first tab (3), and a first protective member (4); **characterized in that**, the electrode assembly (2) is accommodated within the soft package film, and the electrode assembly (2) comprises an electrode body (21) and a plurality of first extension portions (22); one end of each of the plurality of first extension portions (22) is connected to the electrode body (21); and the plurality of first extension portions (22) are sequentially stacked along a first direction; and
other ends of the plurality of first extension portions (22) are stacked on the first protective member (4), and the other ends of the plurality of first extension portions (22) and the first protective member (4) are welded to form a first adapting portion; one end of the first tab (3) is welded to the first adapting portion, and an other end of the first tab (3) extends out of the soft package film; and the first direction is a thickness direction of the electrode assembly (2).

2. The electrochemical apparatus according to claim 1, **characterized in that**,
a plurality of weld marks are formed on a surface of the one end of the first tab (3) facing away from the first extension portion (22), the plurality of weld marks are arranged along a second direction, the second direction is a width direction of the first adapting portion, and the second direction is perpendicular to the first direction.

3. The electrochemical apparatus according to claim 1, **characterized in that**,
the first protective member (4) is formed by bending at least one of the plurality of first extension portions (22).

4. The electrochemical apparatus according to claim 3, **characterized in that**,
the first protective member (4) is formed by bending one first extension portion (22) closest to the first protective member (4) along the first direction; or
the first protective member (4) is formed by bending two first extension portions (22) closest to the first protective member (4) together along the first direction.

5. The electrochemical apparatus according to claim 1, **characterized in that**,
the first protective member (4) comprises at least one spacer, and the other ends of the plurality of first extension portions (22) and the at least one spacer are welded to form the first adapting portion.

6. The electrochemical apparatus according to claim 1, **characterized in that**,
in the first direction, a thickness D1 of the first protective member (4) satisfies: 6 um≤D≤10 um; and/or
in a third direction, a width of the first protective member (4) is less than or equal to a width of the first extension portion (22), and the third direction is perpendicular to the first direction.

7. The electrochemical apparatus according to claim 6, **characterized in that**,
in the first direction, a thickness D1 of the first protective member (4) satisfies: 8 um≤D≤10 um.

8. The electrochemical apparatus according to any one of claims 1 to 7, **characterized in that**,
the electrochemical apparatus further comprises a second tab and a second protective member;
the electrode assembly (2) further comprises a plurality of second extension portions, **characterized in that**, one end of each of the plurality of second extension portions is connected to the electrode body (21), and other ends of the plurality of second extension portions are sequentially stacked along the first direction; and
the other ends of the plurality of second extension portions are further stacked on the second protective member along the first direction; the other ends of the plurality of second extension portions and the second protective member are welded to form a second adapting portion; one end of the second tab is welded to the second adapting portion, and another end of the second tab extends out of the soft package film; and the first tab (3) and the second tab have opposite polarities.

9. The electrochemical apparatus according to claim 8, **characterized in that**,
the second protective member is formed by bending one second extension portion closest to the second protective member along the first direction; and/or
the second protective member is formed by bending two second extension portions closest to the second protective member together along the first direction.

10. The electrochemical apparatus according to claim 8, **characterized in that**,
the second protective member comprises at least one spacer, and the other ends of the plurality of second extension portions and the at least one spacer are welded to form the second adapting portion.

11. An electric device, comprising the electrochemical apparatus according to any one of claims 1 to 10.

12. A method for manufacturing the electrochemical apparatus according to any one of claims 1 to 10, **characterized in that**, the method comprises:
providing an electrode assembly (2),
connecting the one end of the each of the plurality of first extension portions (22) to the electrode body (21);
sequentially stacking the other ends of the plurality of first extension portions (22) along the first direction;
providing the first protective member (4), and stacking the other ends of the plurality of first extension portions (22) on the first protective member (4);
welding the other ends of the plurality of first extension portions (22) to the first protective member (4) on sides of the plurality of first extension portions (22) facing away from the first protective member (4), so as to fix the other ends of the plurality of first extension portions (22) and the first protective member (4) together to form the first adapting portion;
providing the first tab (3) and welding the one end of the first tab (3) to the first adapting portion;
providing the soft package film, **characterized in that**, the soft package film comprises a first package film and a second package film; and
placing the electrode assembly (2) between the first package film and the second package film, and sealing edges of the first package film and second package film, **characterized in that**, the other end of the first tab (3) extends out of the soft package film.

13. The method according to claim 12, **characterized in that**,
the step of providing the first protective member (4) further comprises:
bending at least one of the plurality of first extension portions (22) to form the first protective member (4).

14. The method according to claim 12, **characterized in that**,
the step of providing the first protective member (4) further comprises:
providing at least one spacer, and pre-welding the at least one spacer to the other ends of the plurality of first extension portions (22) to form the first protective member (4).

15. The method according to claim 13 or 14, **characterized in that**,
before the step of welding the other ends of the plurality of first extension portions (22) to the first protective member (4) on sides of the plurality of first extension portions (22) away from the first protective member (4), the method further comprises:
cutting portions of the plurality of first extension portions (22) extending beyond the first protective member (4) along a fourth direction, **characterized in that**, the fourth direction is perpendicular to the first direction, and the fourth direction is a direction from one end of the first extension portion (22) to another end of the first extension portion (22).
